# EUROPÄISCHE PATENTANMELDUNG

(11) **EP 0 645 195 A2**
(43) Veröffentlichungstag der Anmeldung: **29.03.1995**
(21) Anmeldenummer: 94114977.5
(22) Anmeldetag: 22.09.1994
(51) Int. Cl.: B06B 3/00

(54) **Verfahren zur Herstellung von Sonotroden**

(30) Priorität: 24.09.1993 DE 4332595
(71) Anmelder: THERA Patent GmbH & Co. KG Gesellschaft für industrielle Schutzrechte, D-82229 Seefeld (DE)
(72) Erfinder: Burger, Bernd, D-82239 Alling (DE); Guggenberger, Rainer, Dr., D-82211 Herrsching (DE)
(74) Vertreter: Strehl Schübel-Hopf Groening & Partner

(57) **Zusammenfassung**

Ein Verfahren zur Herstellung von Sonotroden für die Ultraschallbearbeitung von Werkstücken, insbesondere Hochleistungskeramiken, zur Herstellung von Präzisionsformteilen, insbesondere keramischem Zahnersatz ist dadurch gekennzeichnet, daß mindestens eine der als Gußmodell für die Sonotroden dienenden Präsonotroden mindestens zum Teil aus einem flexiblen, vollständig verbrennbaren Modellmaterial gefertigt wird. Das Verfahren zeichnet sich durch Schnelligkeit und hohe Präzision aus, so daß die wirtschaftliche Herstellung individuell geformter Zahnersatzteile möglich wird.

## Beschreibung

Die Erfindung befaßt sich mit der Herstellung von Sonotroden für die Ultraschallbearbeitung von Werkstücken, insbesondere Hochleistungskeramiken zur Herstellung von Präzisionsformteilen, insbesondere keramischem Zahnersatz.

Ultraschallbearbeitungsverfahren für keramische Werkstoffe sind z.B. aus R. Haas, Ultraschallerosion, Sprechsaal 121 (1988) S. 1166-1172 oder G. Spur, Keramikbearbeitung, Carl Hanser Verlag, München 1989, S. 423-443, bekannt.

Insbesondere mit der Herstellung von keramischem Zahnersatz mittels Ultraschallbearbeitung befassen sich die DE 39 28 684 (Hahn), die US 39 71 133 (Mushabac) sowie die deutschen Patenanmeldungen P 42 32 023.2 (Hahn) und P 42 41 936.0 (Hahn). Zum Stand der Technik betreffend Maschinen zur Ultraschallbearbeitung sei ausdrücklich auf diese Veröffentlichungen hingewiesen. P 42 32 023.2 (Hahn) und P 42 41 936.0 (Hahn) beschreiben darüber hinaus Verfahren sowie Vorrichtungen zur Herstellung von Sonotroden.

Die Sonotrode ist das Negativ eines Teils der Form des herzustellenden Werkstücks. Durch den Übertrag mechanischer Energie der oszillierenden Sonotrode auf einen sprödharten Werkstoff mittels eines Läppkorngemisches im Arbeitsspalt zwischen Sonotrodenkrone und Werkstück wird durch zerspanende Abtragung die Sonotrodenkrone im Werkstück abgebildet. Bearbeitung des Werkstücks durch zwei Sonotroden in axial entgegengesetzter Richtung führt letztendlich zu einem dreidimensionalen Formteil.

Üblicherweise in der Werkzeugtechnik verwendete Sonotrodenmaterialien sind Metalle, wie z.B. Chrom-Nickel oder Chrom-Vanadium-, Chrom-Kobalt-Molybdän-Legierungen aber auch weichere Metalle wie Kupfer und dessen Legierungen (Cu-Sn, Cu-Zn), sowie Palladium-Basis-Legierungen (R. Haas, Ultraschallerosion, Sprechsaal 121, 1988). Auch der Einsatz von ein- oder polykristallinem Silicium wird beschrieben (DE 40 29 285, Siemens).

Die in der Technik üblichen Herstellungsverfahren für Sonotroden mit Mitteln des Werkzeugbaus sind nur für Großserien wirtschaftlich durchführbar und somit für individuelle Formteile wie sie in der Zahntechnik verlangt werden ungeeignet. Darüber hinaus können geometrisch komplexe Formen kleiner Dimension, wie sie Zahnersatzteile darstellen, aus konventionellen Werkstückmaterialien häufig nicht hergestellt werden.

US 39 71 133 (Mushabac) und DE 39 28 684 (Hahn) beschreiben Verfahren zur Herstellung von Sonotroden zur Herstellung von individuellen Formkörpern, unter Verwendung von plastisch verformbaren, härtenden oder härtbaren Massen, wie z.B. thermoplastischem oder härtbarem Kunststoff oder von Zementen. Die ausgehärteten Massen bilden den Körper der Sonotrodenkrone, welche zur Erhöhung der Verschleißfestigkeit mit einer harten, verschleißfesten Schicht, wie z.B. Metall, z.B. durch Aufgalvanisieren oder Aufdampfen versehen wird.

Eine erhebliche Verbesserung der Verschleißfestigkeit wird durch Ausführung der gesamten Sonotrodenkrone in Metall erreicht. Ein Weg hierzu ist die Modellierung von Präsonotroden aus rückstandsfrei verbrennbarem Kunststoff und deren Überführung in Metallsonotroden durch Dublierung nach dem Prinzip der verlorenen Form. Dies geschieht in einem in der Zahntechnik üblichen Verfahren durch Einbetten der aus einem rückstandlos verbrennbaren Kunststoff gebildeten Präsonotroden in geeignete, meist mineralische Einbettmassen, durch vollständiges Ausbrennen der Präsonotroden und Ausgießen des entstandenen Hohlraumes mit geeigneten verflüssigten Metallen, z.B. einer Phantommetall-Legierung zur Bildung der fertigen Sonotroden. Geeignet sind weiterhin Legierungen auf Pd-Basis wie z.B. Cerapal®, auf Ni-Basis wie z.B. Wiron® oder Wironit sowie auf Cr-Co-Mo-Basis. Die deutsche Anmeldung P 42 32 023.2 (Hahn) beschreibt ein derartiges Verfahren zur Herstellung individuell gestalteter Metallsonotroden.

Obwohl die mit Hilfe von vollständig verbrennbaren Präsonotroden hergestellten Metallsonotroden verschleißfester sind, als die metallbeschichteten Sonotroden aus US 39 71 133 (Mushabac) oder DE 39 28 684 (Hahn), tritt auch bei ihnen bei der Bearbeitung moderner bruchzähfester Hochleistungskeramiken merklicher Materialverlust auf. Dies führt zu Maßungenauigkeiten des herzustellenden Formstücks, d.h. zu Maßdifferenzen zwischen Arbeitsmodell und Keramikformkörper. Für das Beispiel von keramischem Zahnersatz bedeutet dies, daß es beim Einsetzen des Zahnersatzes in den Mund des Patienten zu Spannungs- und/oder Randspaltbildung kommen kann. Insbesondere für die zervikale Seite, d.h. die Seite mit der das Zahnersatzteil auf die präparierten Zähne aufgesetzt wird, muß daher höchstmögliche Präzision gefordert werden.

Die deutsche Anmeldung P 42 41 936.0 (Hahn) beschreibt ein Verfahren zur Korrektur derartiger durch Verschleiß der Sonotroden bedingter Maßungenauigkeiten. Hierzu wird durch Abformung der Originalsonotrode eine Sonotrodenkopie hergestellt, mit der das Werkstück bis kurz vor Erreichen der Soll-Einsenktiefe bearbeitet wird. Bei einem darauffolgenden Finierschritt wird die Originalsonotrode in Formeingriff mit dem vorbearbeiteten Werkstück gebracht und das Werkstück bis zur Soll-Einsenktiefe nachbearbeitet. Insbesondere bei der Formgebung der zervikalen Seite von keramischem Zahnersatz wird durch dieses zweiphasige Verfahren die in der Zahntechnik notwendige Präzision erreicht.

Aus dem oben ausgeführten Stand der Technik ergeben sich für die Herstellung von individuell geformten Präzisionsformteilen mittels Ultraschallerosionstechnik folgende Probleme:

Die Herstellung der für die Erzeugung von Präzisionsformteilen notwendigen Sonotroden und deren Kopien ist sehr zeitaufwendig und z.B. für die Produktion individueller Zahnersatzteile in Konkurrenz zu anderen Verfahren nicht wirtschaftlich durchführbar. Darüber hinaus können Fehler bei der Dublierung der Originalsonotroden zu Sonotroden mit nicht ausreichender Präzision führen.

Aufgabe der vorliegenden Erfindung ist es daher, ein Verfahren zur Herstellung von Sonotroden für die sonoerosive Herstellung von Präzisionsformkörpern, insbesondere von keramischem Zahnersatz, bereitzustellen, das sich auszeichnet durch handhabungssichere und schnelle Durchführung sowie eine hohe Präzision der Sonotroden.

Erfindungsgemäß wird diese Aufgabe durch das im Patentanspruch 1 angegebene Verfahren gelöst, bei dem mindestens eine der Präsonotroden mindestens teilweise aus einem flexiblen, vollständig verbrennbaren Modellmaterial gefertigt wird. Die Verwendung eines flexiblen, vollständig verbrennbaren Modellkunststoffs ermöglicht eine zerstörungsfreie Abformung des Wachsarbeitsmodells bei der Sonotrodenherstellung.

Dieses Verfahren hat gegenüber dem Stand der Technik wesentliche Vorteile. So kann das Wachsmodell ohne Qualitätsverlust mehrfach abgeformt werden, d.h. es können im Prinzip beliebig viele gleichwertige Präsonotroden von einem Originalmodell hergestellt werden. Ungenauigkeiten beim Kopieren von Originalsonotroden mittels Abdrucknahme und Dublierung entfallen beim erfindungsgemäßen Verfahren. Durch die Möglichkeit der mehrfachen Abformung des Wachsarbeitsmodells entfällt das zeitaufwendige Kopieren von Originalsonotroden, wodurch der zeitliche Aufwand der Sonotrodenherstellung erheblich reduziert wird.

Käufliche, rückstandsfrei verbrennbare Modellmaterialien wie z.B. Pattern Resin (Fa. GC), Palavit G und Palavit LC (Fa. Kulzer), Visio-Form (Fa. ESPE) sind sowenig flexibel, daß z.B. Wachsmodelle mit ihnen nicht zerstörungsfrei abformbar sind. Der Verwendung flexibler, rückstandsfrei verbrennbarer Modellmaterialien stand bisher das Vorurteil entgegen, daß bleibende Deformationen durch plastische Verformung des Modells bei der Handhabung zu befürchten seien, und daß das Modell beim Einbetten in das Material der Gußmuffel nicht formstabil bleibe.

Erfindungsgemäß einsetzbare Modellmassen sind vorzugsweise solche, die zum einen eine ausreichende Flexibilität aufweisen, um eine zerstörungsfreie Abformung von Arbeitsmodellen auch bei ggfs. vorhandenen Unterschnitten zu erlauben, sowie eine weitgehend rückstandsfreie Verbrennbarkeit erlauben.

Geeignet hierfür sind z.B. flexible Methacrylatmassen auf Basis von mono, bi- oder polyfunktionellen Methacrylaten, welche z.B. mit Polyetherderivaten flexibilisiert sein können, wie sie in der DE 40 25 776 beschrieben sind. Ebenfalls geeignet sind flexibilisierte, gegebenenfalls lichthärtende Epoxidmassen, z.B. nach der deutschen Anmeldung P 43 24 322.3. Weiterhin geeignet sind z.B. Massen auf Polyurethan- oder Polyharnstoffbasis.

Besonders geeignet sind Massen auf Basis von aziridingruppenhaltigen Polyethern, welche durch geeignete Startersubstanzen vulkanisiert werden können. Derartige Polyethermassen sind beispielsweise in DE 17 45 810 (Schmitt et al.) beschrieben, geeignete Startersubstanzen z.B. in DE 25 15 593 (Schmitt et al.). Besonders geeignet sind derartige Polyethermassen, wenn sie als Füllstoffe rückstandsfrei verbrennbare Fällungs-Polymerisate auf Basis von polymerisierten Methacrylaten enthalten, welche z.B. in EP 0 270 915 (Lechner et.al.) beschrieben sind. Geeignet als Füllstoffe sind aber auch Fette auf Basis von Triglyceriden wie z.B. hydrierter Rindertalg, gehärtete Pflanzenöle oder synthetische Fette.

Für die Ultraschallbearbeitung sind im allgemeinen sprödharte Werkstoffe geeignet. Bevorzugt sind Keramikmaterialien, bei denen eine formgebende Zerspanung mit anderen Methoden wie z.B. Fräsen oder Schleifen nur schwer möglich ist. Für Zahnersatzteile werden Keramiken aus Aluminiumoxid bevorzugt, wobei transparente Aluminiumoxidkeramiken ganz besonders bevorzugt sind. Diese können einheitlich eingefärbt oder auch in Schichten unterschiedlicher Farbe eingefärbt sein (R. Hahn, C. Löst, Dt. Zahnärztliche Zeitschrift 47 (1992) 659-664).

Im folgenden wird das in den deutschen Anmeldungen P 42 32 023.2 (Hahn) und P 42 41 936.0 (Hahn) beschriebene Verfahren zur Herstellung von Sonotroden für eine Zahnkrone (Beispiel 1) mit einem erfindungsgemäßen Verfahren verglichen (Beispiel 2). Dabei wird auf die beigefügte Zeichnung Bezug genommen, in der
Fig. 1 und 2 das erfindungsgemäße Verfahren in zwei Verfahrensstufen zeigen,
Fig. 3 ein herkömmliches Herstellungsverfahren zeigt, und
Fig. 4a bis 4d Beispiele für verschiedene Sekundärsonotroden zeigen.

### Beispiel 1

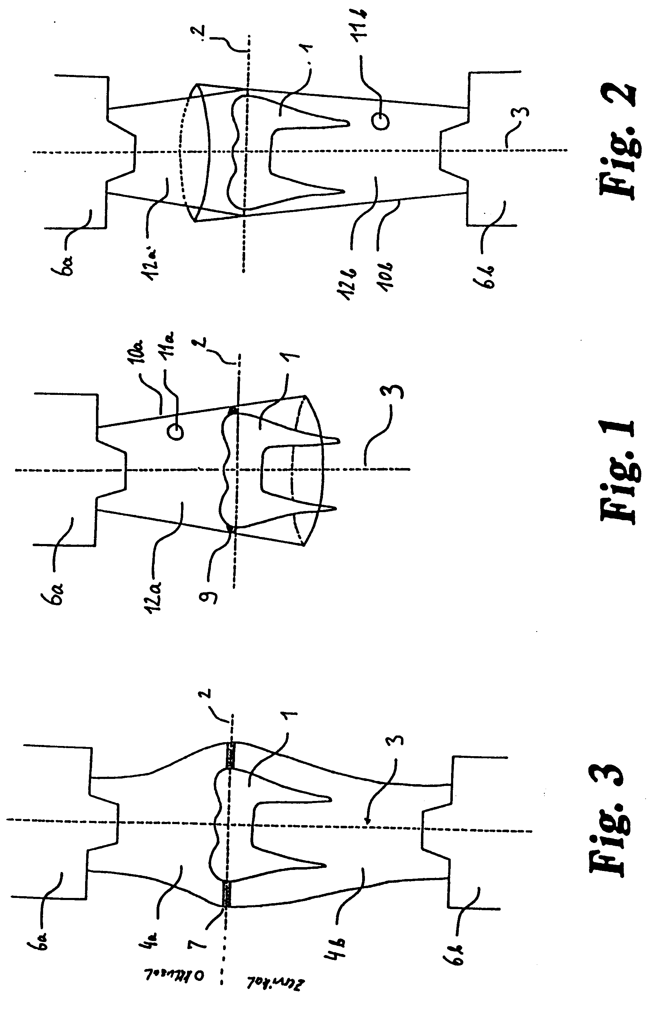

Herstellung von Sonotroden für eine Zahnkrone nach den deutschen Anmeldungen P 42 32 023.2 (Hahn) und P 42 41 936.0 (Hahn).
1. Wie in Fig. 3 dargestellt, wird an einem Wachsarbeitsmodell 1 des herzustellenden Formkörpers der sogenannte Modelläquator 2 definiert, welcher den größten Durchmesser des Modells in Bezug auf die Modellängsachse 3 beschreibt und der Bearbeitungsachse entspricht.
2. Zunächst wird auf okklusaler Seite durch schichtweisen Auftrag eines handelsüblichen Modellierkunststoffs, z.B. Pattern Resin, Fa. GC, die okklusale Präsonotrodenkrone 4a modelliert und dabei in Richtung der Bearbeitungsachse 3 an einer vorgefertigten Sekundärsonotrode 6a fixiert, welche in dem Aufnahmeteil eines geometrischen Modells einer Ultraschallbearbeitungsmaschine befestigt ist, das z.B. in der deutschen Anmeldung P 42 32 023.2 (Hahn) beschrieben ist, und als "Phantommodell" bezeichnet wird.
3. Die Präsonotrodenkrone 4a wird anschließend durch Aufbringen eines Filmbildners isoliert, wobei der Isolierfilm 7 entsteht.
4. Hierauf folgt der schichtweise Aufbau der Sonotrodenkrone 4b auf zervikaler Seite und deren Fixierung an der Sekundärsonotrode 6b.
5. Vor oder nach dem Trennen der beiden Präsonotroden entlang der isolierten Äquatoriallinie wird das Wachsmodell 1 ausgebrüht. Wie aus der Zahntechnik bekannt ist, besteht bei diesem Schritt die Gefahr einer Schädigung der Präsonotroden in Form einer bleibenden Deformation durch die thermische Belastung, wodurch die gerade bei der zervikalen Präsonotrode geforderte höchste Präzision verloren gehen kann.
6. Im Anschluß an die Herstellung der Originalpräsonotroden muß die zervikale Präsonotrode durch Abformung mittels eines Silikonabdruckmaterials kopiert werden. Dies geschieht gemäß der deutschen Anmeldung P 42 41 936.0 mit Hilfe einer geeigneten Dublieraufnahme. Die Präsonotrodenkrone 4b wird in dieser, mittels einer Dublier- oder Abformmasse, wie z.B. einem additionsvernetzenden Silikonmaterial, abgeformt. Die Negativform der zervikalen Präsonotrodenkrone wird mit einem härtenden oder härtbaren Material gefüllt, in welche mit Hilfe der Dublieraufnahme ein Sekundärsonotrodenkörper vergleichbar 6a oder 6b ausgerichtet eingebracht wird. Das ausgehärtete Material zusammen mit der Sekundärsonotrode ergeben eine Kopie der zervikalen Präsonotrode, welche noch durch Beschleifen des Überschusses an härtbarem Material in Form gebracht werden muß.

### Beispiel 2

Erfindungsgemäße Herstellung von Sonotroden für eine Zahnkrone ( Fig. 1 und 2).
1. Nach Festlegung und Markierung des Modelläquators 2 des Wachsarbeitsmodells 1 wird entlang des Modelläquators auf okklusaler Seite ein dünner Streifen 9 eines vollständig verbrennbaren Modellkunststoffs (z.B. Visio-Form, Fa. ESPE) aufgetragen und ausgehärtet. Anschließend wird ein vorgefertigter, beidseitig offener Kegelmantel 10a aus einer flexiblen, vorzugsweise transparenten, vollständig verbrennbaren Folie mit seiner stumpfen Seite von okklusaler Seite auf das Modell 1 aufgeschoben, bis seine Wandung am ausgehärteten Kunststoffring 9 anliegt und die Kegelachse in Richtung der Bearbeitungsachse 3 liegt.
2. Das spitze Kegelende wird in Bearbeitungsrichtung auf eine Sekundärsonotrode 6a aufgesetzt, welche in dem Aufnahmeteil eines geometrischen Modells einer Ultraschallbearbeitungsmaschine (Phantommodell) befestigt ist, das z.B. in der deutschen Anmeldung P 42 32 023.2 (Hahn) beschrieben ist.
3. Durch ein im Kegelmantel befindliches Loch 11a wird in den von Modell 1, Kegelmantel 10a und Sekundärsonotrode 6a gebildeten Hohlraum 12a eine vollständig verbrennbare Modellmasse (z.B. Visio-Form, Fa. ESPE) eingespritzt und bevorzugt durch Licht ausgehärtet. Für diesen Arbeitsschritt sind auch selbsthärtende Massen verwendbar. Dieser Vorgang ersetzt den zeitaufwendigen schichtweisen Aufbau der Sonotrodenkrone nach Punkt 2 des Beispiels 1.
4. Nach Abnahme des Kegelmantels 10a wird die zervikale Seite des Modells mit einer nicht filmbildenden Isolierflüssigkeit (z.B. Visio-Gem-Isolierflüssigkeit, Fa. ESPE) leicht eingestrichen.
5. Ein weiteres Kegelhütchen 10b wird von zervikaler Seite auf das Arbeitsmodell aufgeschoben (Fig. 2), bis seine Wandung am ausgehärteten Kunststoffrand der okklusalen Präsonotrodenkrone 12a aufsitzt und die Kegelachse in Bearbeitungsrichtung 3 zeigt. Das spitze Kegelende wird wiederum in Bearbeitungsrichtung auf eine im geometrischen Modell sitzende Sekundärsonotrode 6b aufgesetzt.
6. Durch ein Loch 11b im Kegelmantel 10b wird in den durch Modell 1, Kegelmantel 10b und Sekundärsonotrode 6b gebildeten Hohlraum 12b eine vollständig verbrennbare Modellmasse eingespritzt, welche nach dem Aushärten durch Licht oder sonstig initiierte Polymerisation flexibel sein muß.
7. Nach dem Aushärten der Modellmasse bilden die Sekundärsonotrode 6b und die flexible Modellmasse im Hohlraum 12b die zervikale Präsonotrode, die vom Wachsarbeitsmodell 1 einfach abgezogen werden kann, ohne daß dieses dabei beschädigt wird. Vorzugsweise werden die Kegelmäntel 10a, 10b anschließend von der Präsonotrode abgezogen. Bei Wahl eines geeigneten Materials für die Kegelmäntel 10a und 10b können diese auch als Teil der Präsonotroden verbleiben.
8. Die derart gebildeten Präsonotroden werden nach dem Prinzip der verlorenen Form in dentale Einbettmasse eingebettet, und erhitzt. Dabei wird zunächst die Einbettmasse mit einer Aufheizrate von 1 K/min. auf 300°C aufgeheizt und dort eine Stunde gehalten, wobei das Material der Präsonotrode flüssig wird. Anschließend wird auf eine Temperatur von 600°C weiter erhitzt und dort wieder für ca. eine Stunde gehalten, wobei das in der Einbettmasse eingeschlossene Material der Präsonotroden vollständig und rückstandsfrei verbrennt. Danach wird auf ca. 720°C erwärmt und flüssiges Metall wie beispielsweise sog. Phantommetall wird in den entstandenen Hohlraum zur Bildung der Sonotroden gegossen.
9. Durch Wiederholen der Schritte 5 bis 7 kann eine zweite (bzw. beliebig viele) zervikale Präsonotrode hergestellt werden, die in der Präzision der ersten nicht nachsteht. Dieser Vorgang ersetzt das umständliche und fehleranfällige Verfahren der Kopie der zervikalen Präsonotrode gemäß dem Stand der Technik, wie in Beispiel 1 unter Punkt 6 aufgeführt.

Die im Punkt 8 genannten Verfahrensschritte sind beispielhaft aufzufassen und sind dem einschlägigen Fachmann bekannt. Das erfindungsgemäße Verfahren kann bei Verwendung anderer Materialien andere Temperaturen oder Zeiten erfordern.

Beim Vergleich der beiden oben geschilderten Verfahren zur Herstellung von individuell geformten Sonotroden ergeben sich für das erfindungsgemäße Verfahren nach Beispiel 2 folgende Vorteile:
Für einen mit beiden Verfahren gut vertrauten Zahntechniker beträgt die Arbeitszeit nach Beispiel 1 85 Minuten, nach Beispiel 2 37 Minuten, d.h. der Zeitbedarf nach dem erfindungsgemäßen Verfahren beträgt deutlich weniger als die Hälfte als nach dem herkömmlichen Verfahren. Es ist eine höhere Präzision der Sonotroden durch Wegfall des bisher erforderlichen Kopierschnittes (Beispiel 1, Punkt 6) durch erneute Direktabformung des Modells 1 (Beispiel 2, Punkt 8) erzielbar. Ferner kann das Ausbrühen des Wachsmodells 1 aus der zervikalen Präsonotrode und die Bildung des Isolierfilms 7 gemäß Beispiel 1, Punkt 3 entfallen.

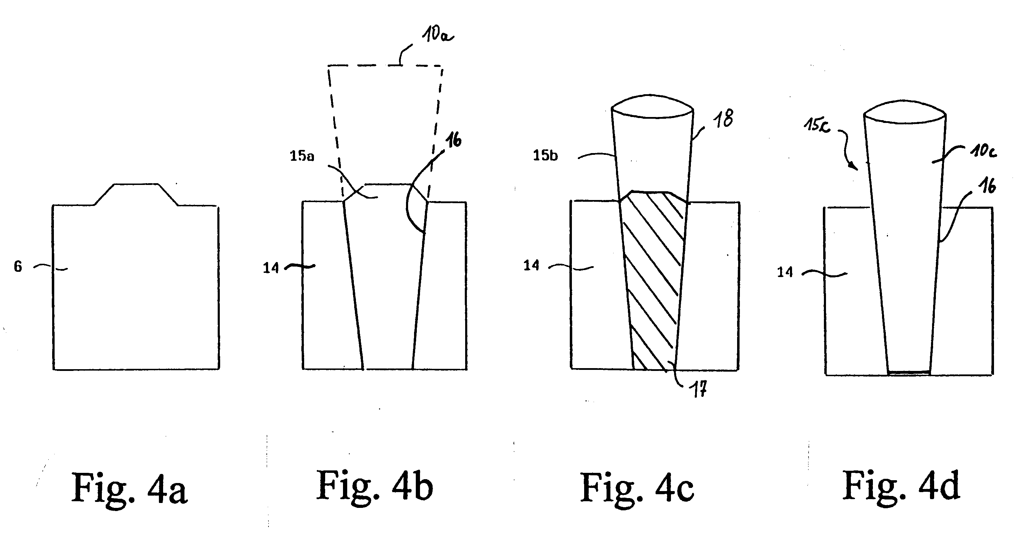

In einer anderen Ausführungsform des erfindungsgemäßen Herstellungsverfahrens von Sonotroden wird eine Sekundärsonotrode verwendet, die zweiteilig aufgebaut ist. Im Gegensatz zur den in den Figuren 1 bis 3 und 4a gezeigten Ausführungsformen der Sekundärsonotrode 6a und 6b weist die in Figuren 4b und 4c gezeigte modifizierte Sekundärsonotrode 14 in axialer Richtung eine zentrale Bohrung 16 auf. Vorzugsweise ist diese Bohrung 16 in Richtung der Sonotrodenkrone konisch sich erweiternd ausgebildet. In diese zentrale Bohrung 16 wird ein Formteil 15a, bestehend aus einem rückstandsfrei verbrennbaren Kunststoff, formschlüssig derartig eingeführt, daß das aus Sekundärsonotrode 14 und Formteil 15a bestehende Bauteil im wesentlichen die gleiche Form wie die oben beschriebene und in Figur 4a gezeigte Sekundärsonotrode 6 aufweist.

Die auf diese Weise gebildete Sekundärsonotrodenausführung wird analog Schritt 2 von Beispiel 2 eingesetzt. Es wird also das spitze Kegelende des Kegelmantels 10a auf den Ansatz 17 des Formteils 15a aufgesetzt und das Innere des Kegelmantels 10a wird anschließend mit rückstandslos verbrennbarem Kunststoff ausgefüllt. Dabei bildet der eingespritzte Kunststoff mit dem Kunststoff des Formteils 15a eine integrale Einheit, die durch Herausziehen des Formteils 15a aus der Bohrung 16 von der Sekundärsonotrode 14 getrennt und in Einbettmasse eingebettet wird. Durch anschließende Erwärmung wird der Kunststoff des kunststoffgefüllten Kegelmantels 10a sowie des Formteils 15a rückstandsfrei ausgebrannt und in den so gebildeten Hohlraum Metall eingegossen. Die auf diese Weise geformte Sonotrodenkrone wird zur Bearbeitung eines Werkstücks wieder in die Bohrung 16 der Präsonotrode 14 eingesteckt.

Gemäß einer weiteren, in Fig. 4c gezeigten Ausführungsform der Erfindung besteht das Formteil 15b aus einem im wesentlichen massiven werkzeugseitigen Abschnitt 17, der im wesentlichen die gleiche Form aufweist wie das Formteil 15a gemäß Fig. 4a, an den zusätzlich ein konischer Kragen 18 angeformt ist, der die Form und Maße des Kegelmantels 10a aus Beispiel 2 aufweist. Durch diese Ausführung wird sichergestellt, daß diejenigen die Sonotrodenkrone bildenden Kunststoffteile eine integrale Einheit formen und ein Lösen des in den Kegelmantel 10a eingespritzten Kunststoffs von der Sekundärsonotrode 6 bzw. 14 während des Arbeitsprozesses sicher vermieden wird.

Die Herstellung der Sonotrodenkrone 4 durch Abformung des Modells 1 geschieht mit diesen modifizierten Präsonotroden 14, 15a bzw. 14, 15b in analoger Weise wie in den Verfahrensschritten 1 bis 7 von Beispiel 2 beschrieben. Im Anschluß an Verfahrensschritt 7 werden jedoch die Formteile 14 und 15a bzw. 15b (mit aufgebrachter Sonotrodenkrone 4) voneinander getrennt und jeweils das Formteil 15a bzw. 15b jeweils mit aufgebrachter Sonotrodenkrone nach dem Prinzip der verlorenen Form in Metall übergeführt (vgl. Schritt 8 von Beispiel 2). Nach erfolgtem Gießvorgang wird das gebildete Sonotrodenformteil wiederum mit der modifizierten Sekundärsonotrode 14 formschlüssig verbunden, beispielsweise durch Löten, Kleben, Klemmen, Pressen oder ähnlichen Verfahren.

Schließlich ist in Fig. 14d noch eine Ausführungsform der Erfindung dargestellt, bei der der Kegelmantel 10c rückseitig geschlossen ist und zur Befestigung an der Sekundärsonotrode in deren konische Bohrung 16 eingeführt wird. Bei dieser Ausführungsform erfolgt der Herstellungsprozeß im wesentlichen wie im Beispiel 2 beschrieben.

## Patentansprüche

1. Verfahren zur Herstellung von Sonotroden für die Ultraschallbearbeitung von Werkstücken zur Herstellung von dreidimensionalen Formteilen, dadurch gekennzeichnet, daß mindestens eine der als Gußmodell für die Sonotroden dienenden Präsonotroden (12a, 12b) mindestens zum Teil aus einem flexiblen, vollständig verbrennbaren Modellmaterial gefertigt wird.

2. Verfahren nach Anspruch 1, dadurch gekennzeichnet, daß das flexible, vollständig verbrennbare Modellmaterial durch Vulkanisation eines aziridingruppenhaltigen Monomers erhalten wird.

3. Verfahren nach Anspruch 2, dadurch gekennzeichnet, daß als aziridingruppenhaltige Monomer ein aziridingruppentragender Polyether verwendet wird.

4. Verfahren nach einem der Ansprüche 2 oder 3, dadurch gekennzeichnet, daß das flexible, vollständig verbrennbare Modellmaterial als Füllstoff ein Fällungs-Polymerisat und/oder Fette auf Basis von Triglyceriden enthält.

5. Verfahren zur Herstellung von Sonotroden für die Ultraschallbearbeitung von Werkstücken für die Erzeugung von dreidimensionalen Formteilen, gekennzeichnet durch die folgenden Schritte:
(a) Aufsetzen einer ersten Formhülle (10a) aus Kunststoffmaterial am Außenumfang des Modells (1);
(b) Ansetzen einer Halterung (6a, 6b) für die zu bildende Sonotrode am werkstückfernen Ende der ersten Formhülle (10a);
(c) Einfüllen eines flexiblen, aushärtbaren, vollständig verbrennbaren Kunststoffmaterials in den Hohlraum (12a) der ersten Formhülle (10a) zur Bildung der ersten Präsonotrode, und Aushärten des Kunststoffmaterials;
(d) Aufsetzen einer zweiten Formhülle (10b) auf der der ersten Formhülle (10a) entgegengesetzten Seite des Modells (1);
(e) Einfüllen eines aushärtbaren, flexiblen, vollständig verbrennbaren Kunststoffmaterials in den Hohlraum (12b) der zweiten Formhülle (10b) zur Bildung der zweiten Präsonotrode und Aushärten des Kunststoffmaterials;
(f) separates Einbetten der beiden Präsonotroden in eine dentale Einbettmasse und Ausbrennen der Präsonotroden;
(g) Ausgießen des derartig gebildeten Hohlraums mit einem geeigneten Werkstoff zur Bildung der Sonotroden (4a, 4b).

6. Verfahren nach Anspruch 5, dadurch gekennzeichnet, daß die erste und/oder die zweite Formhülle (10a, 10b) aus vorzugsweise durchsichtigem Kunststoff gebildet wird.

7. Verfahren nach Anspruch 5 oder 6, dadurch gekennzeichnet, daß die erste und/oder die zweite Formhülle (10a, 10b) im wesentlichen konisch gebildet ist.

8. Verfahren nach Anspruch 5, dadurch gekennzeichnet, daß die erste und/oder die zweite Formhülle (10a, 10b) aus vollständig verbrennbarem Kunststoff gebildet wird.

9. Verfahren nach Anspruch 5, dadurch gekennzeichnet, daß als Kunststoffmaterial für die Präsonotroden ein lichthärtendes Material verwendet wird.

10. Verfahren nach Anspruch 5, dadurch gekennzeichnet, daß vor dem Aufsetzen der ersten Formhülle (10a, 10b) entlang des Modelläquators (2) des Modells (1) ein Streifen (7) eines vollständig verbrennbaren Modellkunststoffs aufgetragen und ausgehärtet wird.

11. Verfahren nach Anspruch 5, dadurch gekennzeichnet, daß vor dem Aufsetzen der ersten bzw. zweiten Formhülle (10a, 10b) die entsprechende Modellseite mit einer nicht-filmbildenden Isolierflüssigkeit eingestrichen wird.

12. Verfahren nach Anspruch 5, dadurch gekennzeichnet, daß eine okklusale Präsonotrode zur Erzeugung von Zahnersatzteilen mittels der ersten Fomhülle (10a) gebildet wird, und anschließend von der zervikalen Modellseite mehrere zervikale Präsonotroden vom Werkstückmodell abgeformt werden.

13. Verfahren nach Anspruch 5, dadurch gekennzeichnet, daß als Halterung ein Werkzeugkopf (14) mit einer axialen Bohrung (16) verwendet wird, in den ein sonotrodenseitiger Einsatz (15a, 15b, 15c) aus rückstandsfrei verbrennbarem Kunststoff eingesteckt wird, an den die Präsonotrode angeformt wird und der zusammen mit der gebildeten Präsonotrode vom Werkzeugkopf (14) getrennt und durch Ausbrennen und Ausgießen mit Metall zur Sonotrodenkrone (4a, 4b) geformt wird.

14. Verfahren nach Anspruch 13, dadurch gekennzeichnet, daß ein Werkzeugkopf (14) verwendet wird, der eine konisch geformte Bohrung (16) aufweist.

15. Verfahren nach Anspruch 13, dadurch gekennzeichnet, daß der Einsatz (15a) einen aus der Bohrung (16) des Werkzeugkopfes (14) kegelstumpfartig herausragenden Ansatz aufweist, auf den die Formhülse (10a) aufgesteckt wird.

16. Verfahren nach Anspruch 13, dadurch gekennzeichnet, daß ein Einsatz (15b) verwendet wird, der einen in die Bohrung des Werkzeugkopfes (14) einsteckbaren, im wesentlichen massiven Abschnitt (17) aufweist, an den die konische Formhülle (18) angeformt ist.

17. Verfahren nach Anspruch 13, dadurch gekennzeichnet, daß die den Einsatz (15c) bildende Formhülle (16) werkzeugseitig geschlossen ist und in die Bohrung (16) des Werkzeugkopfes (14) eingesteckt wird.
